# FASCICULE DE BREVET EUROPEEN

(11) **EP 2 057 394 B1**
(45) Date de publication et mention de la délivrance du brevet: **01.06.2011**
(21) Numéro de dépôt: 07823420.0
(22) Date de dépôt: 13.08.2007
(51) Int. Cl.: F16L 11/08, F16L 11/16

(54) **CONDUITE FLEXIBLE À HAUTE RÉSISTANCE À LA COMPRESSION AXIALE ET MÉTHODE DE FABRICATION D'UNE TELLE CONDUITE**
SCHLAUCH MIT HOHEM WIDERSTAND GEGEN AXIALE KOMPRESSION UND VERFAHREN ZUR HERSTELLUNG EINES SOLCHEN SCHLAUCHS
FLEXIBLE PIPE HAVING HIGH RESISTANCE TO AXIAL COMPRESSION AND METHOD OF MANUFACTURING SUCH A PIPE

(30) Priorité: 21.08.2006 FR 0607421
(43) Date de publication de la demande: 13.05.2009
(73) Titulaire: Technip France, 92400 Courbevoix (FR)
(72) Inventeur: BECTARTE, Fabrice, F-76000 Rouen (FR); COUTAREL, Alain, F-76130 Mont-Saint-Aignan (FR); ESTRIER, Pascal, F-76490 Saint-Wandrille-Rançon (FR); JUNG, Patrice, Joël, Louis, F-76940 La Mailleraye sur Seine (FR); RIGAUD, Jean, 01960 Peronnas (FR)
(74) Mandataire: Bertrand, Didier
(86) Numéro de dépôt international: PCT/FR2007/001368
(87) Numéro de publication internationale: WO 2008/023110

(56) Documents cités:
- WO-A-01/33129
- WO-A-96/17198

## Description

La présente invention se rapporte à une conduite flexible de transport d'hydrocarbures ou d'autres fluides sous haute pression, et à un procédé de réalisation d'une telle conduite. Plus particulièrement, l'invention concerne une conduite flexible présentant une grande résistance à la compression axiale.

Les conduites flexibles de transport des hydrocarbures sont déjà bien connues, et elles comportent généralement de l'intérieur vers l'extérieur de la conduite, une carcasse métallique, pour reprendre les efforts radiaux d'écrasement, recouverte d'une gaine d'étanchéité interne en polymère, une voûte de pression pour résister à la pression interne de l'hydrocarbure, des nappes d'armures pour reprendre les efforts de tension axiale et une gaine externe en polymère pour protéger l'ensemble de la conduite et notamment pour empêcher l'eau de mer de pénétrer dans son épaisseur. La carcasse métallique et la voûte de pression sont constituées d'éléments longitudinaux enroulés à pas court, et elles confèrent à la conduite sa résistance aux efforts radiaux tandis que les nappes d'armures sont constituées de fils métalliques enroulés selon des pas longs pour reprendre les efforts axiaux. Il est à noter que dans la présente demande, la notion d'enroulement à pas court désigne tout enroulement hélicoïdal selon un angle d'hélice proche de 90°, typiquement compris entre 75° et 90°. La notion d'enroulement à pas long recouvre quant à elle les angles d'hélice inférieurs à 55°, typiquement compris entre 25° et 55° pour les nappes d'armures.

Ces conduites sont destinées au transport des hydrocarbures notamment dans les fonds marins et ce, à de grandes profondeurs. Plus précisément elles sont dites de type «unbonded » et elles sont ainsi décrites dans les documents normatifs publiés par l'American Petroleum Institute (API), API 17J et API RP 17B.

Lorsqu'une conduite, quelle que soit sa structure, est soumise à une pression externe qui est plus élevée que la pression interne, il se produit dans la paroi de la conduite des efforts de compression orientés parallèlement à l'axe de la conduite et qui tendent à raccourcir la longueur de la conduite. Ce phénomène porte le nom d'effet de fond inverse (« reverse end-cap effect » en langue anglaise). L'intensité des efforts de compression axiale est proportionnelle à la différence entre la pression externe et la pression interne. Cette intensité peut atteindre un niveau très élevé dans le cas d'une conduite flexible immergée à grande profondeur, du fait que la pression interne peut, dans certaines conditions, être très inférieure à la pression hydrostatique.

Dans le cas d'une conduite flexible de structure classique, par exemple conforme aux documents normatifs de l' API , l'effet de fond inverse a tendance à induire un effort longitudinal de compression dans les fils constituant les nappes d'armures, et à raccourcir la longueur de la conduite flexible. De plus, la conduite flexible est également soumise à des sollicitations dynamiques notamment lors de l'installation ou en service dans le cas d'une conduite montante (« riser » en langue anglaise). L'ensemble de ces contraintes peut faire flamber les fils des nappes d'armures et désorganiser de façon irréversible les nappes d'armures, provoquant ainsi la ruine de la conduite flexible.

Le document WO 03/083343 décrit une solution permettant d'augmenter la résistance à la compression axiale des nappes d'armures d'une conduite flexible. Cette solution consiste à enrouler autour des nappes d'armures des rubans renforcés par exemple de fibres aramides. De cette manière on limite et on contrôle le gonflement des nappes d'armures. Toutefois, si cette solution permet de résoudre les problèmes liés au flambement radial des fils constituant les nappes d'armures, elle permet seulement de limiter le risque de flambement latéral desdits fils qui perdure.

Le document WO 03/056224 décrit une solution permettant de réduire le risque de flambement latéral des fils constituant les nappes d'armures d'une conduite flexible soumise à un effort de compression axiale. Cette solution consiste à réduire les jeux latéraux entre fils et optionnellement à combler lesdits jeux avec un matériau de remplissage. Toutefois, si cette solution réduit le risque de flambement latéral, elle ne le supprime pas totalement. De plus, cette solution présente l'inconvénient d'augmenter sensiblement la complexité et le coût de fabrication des nappes d'armures, du fait en particulier de la plus grande sévérité des tolérances dimensionnelles.

Le document WO2006/042939 décrit aussi une solution permettant de réduire le risque de flambement latéral. Cette solution consiste à utiliser des fils présentant un fort ratio largeur sur épaisseur et à réduire le nombre total de fils constituant chaque nappe d'armures. Cependant, si cette solution réduit le risque de flambement latéral des nappes d'armures, elle ne le supprime pas totalement.

Le document WO 01/81809 décrit une solution consistant à réaliser la voûte de pression de la conduite à partir de fils agrafés en forme de K, et à utiliser ladite voûte de pression comme butée mécanique pour reprendre les efforts de compression axiale. De plus, les nappes d'armures sont libres de gonfler du fait de l'absence de gaine externe étanche ou d'une quelconque couche de renfort pouvant limiter leur gonflement. Lorsqu'une telle conduite est soumise à un effort de compression axiale, elle se raccourcit jusqu'à ce que les jeux axiaux séparant les spires de la voûte de pression soient nuls et que lesdites spires viennent en butée les unes contre les autres, configuration dans laquelle ladite voûte de pression est apte à reprendre l'essentiel de l'effort de compression axiale. Les nappes d'armures accommodent le raccourcissement en se gonflant, et elles ne contribuent quasiment pas à la reprise de l'effort de compression axiale. En pratique, le raccourcissement d'une telle conduite est généralement important, typiquement de l'ordre de 5% de la longueur. Cet ordre de grandeur résulte directement de la géométrie de la voûte de pression et plus particulièrement du ratio entre d'une part la longueur cumulée des jeux axiaux séparant les spires et d'autre part la longueur totale de la conduite. Il résulte indirectement de règles générales de conception issues des documents normatifs de l'API, lesdites règles visant entre autres à minimiser le rayon de courbure auquel la conduite peut être fléchie sans subir de dommage, ceci afin de faciliter les opérations de manutention et de stockage. Or, le fait qu'une telle conduite puisse se raccourcir de façon importante lorsqu'elle est soumise à un effet de fond inverse pose plusieurs problèmes. Tout d'abord, ce raccourcissement engendre un gonflement important des nappes d'armures qui risque de les désorganiser irréversiblement, en particulier si la conduite est simultanément sollicitée en flexion dynamique. A titre d'exemple, une nappe d'armures fabriquée avec un angle d'hélice de 35° gonfle de quasiment 10% lorsqu'elle est raccourcie de 5%. Dans les mêmes conditions de raccourcissement, une nappe d'armures fabriquée avec un angle d'hélice de 25° gonfle de l'ordre de 20%. A de tels niveaux de gonflement relatif, les déplacements radiaux des fils peuvent être 5 à 10 fois supérieurs à leur propre épaisseur, ce qui explique le risque de désorganisation des nappes d'armures. Un autre inconvénient du raccourcissement potentiel est qu'une telle conduite a tendance à se redresser lorsqu'elle est soumise à un effet de fond inverse, ce qui génère des instabilités et des couples de flexion pouvant avoir des effets dommageables en particulier au niveau des zones de connexion avec les équipements sous-marins.

Le document WO 96/17198 décrit, notamment à la figure 18, une conduite flexible comportant une couche tubulaire de blocage axial pouvant reprendre les efforts de compression axiale et limiter le raccourcissement de la conduite, ce qui permet d'éviter d'endommager les nappes d'armures, selon la préambule de la revendication 1.

WO 96/17198 divulgue également un procédé de fabrication d'une telle conduite avec une couche de blocage axial, selon la préambule de la revendication 10.

Cette couche tubulaire de blocage axial comprend deux fils profilés de forme trapézoïdale, enroulés à pas court et prenant appui l'un contre l'autre sur leurs flancs inclinés de façon à former des spires jointives. La flexibilité de cette couche repose sur la mobilité radiale relative des deux fils qui peuvent glisser l'un contre l'autre le long de leurs flancs inclinés. Cette couche est disposée autour du tube interne d'étanchéité, si bien qu'elle joue aussi le rôle de voûte de pression. Cependant, des essais ont montré qu'une telle conduite présente un risque d'endommagement lorsqu'elle est simultanément soumise à un effort important de compression axiale et à des cycles répétés de flexion alternée, comme ce peut être le cas pour la partie basse des colonnes montantes à proximité du point de contact avec le fond marin. Cet endommagement concerne plus particulièrement la couche de blocage axial qui peut progressivement se désorganiser et perdre tout ou partie de sa flexibilité, ce qui peut conduire à la ruine de la conduite.

Aussi, un problème qui se pose et que vise à résoudre la présente invention est de fournir une conduite flexible qui non seulement puisse résister à une forte compression axiale sans se raccourcir, mais aussi qui aussi puisse résister durablement à des cycles répétés de flexion alternée tout en conservant sa flexibilité et son intégrité. En outre, il est souhaitable que cette conduite puisse être fléchie à de faibles rayons de courbure.

Dans le but de résoudre ce problème, la présente invention propose une conduite flexible de transport des hydrocarbures, ladite conduite présentant deux structures tubulaires coaxiales, respectivement interne et externe , et une couche tubulaire de blocage axial située entre lesdites structures tubulaires, ladite couche tubulaire de blocage comprenant au moins deux fils profilés enroulés hélicoïdalement à pas court, lesdits au moins deux fils profilés présentant chacun une section trapézoïdale sensiblement isocèle, ladite section trapézoïdale définissant une base et deux flancs latéraux opposés inclinés l'un par rapport à l'autre, ladite base de l'un desdits au moins deux fils profilés étant orientée vers la structure tubulaire interne, tandis que ladite base de l'autre desdits au moins deux fils profilés est orientée à l'opposé de ladite structure tubulaire interne, lesdits au moins deux fils profilés étant enroulés flanc latéral contre flanc latéral en formant des spires jointives de façon à bloquer axialement en compression ladite conduite, lesdites spires jointives définissant deux surfaces de joint inclinées par rapport à l'axe de ladite conduite ; selon l'invention ladite structure tubulaire interne comprend un fil de structure enroulé à pas court pour former des spires de structure bloquées transversalement les unes par rapport aux autres ; et ledit un desdits au moins deux fil profilé est enroulé en appui sur lesdites spires de structure de façon que la déformation en fléchissement de ladite couche tubulaire de blocage provoque simultanément le mouvement relatif axial desdites spires de structure et le déplacement relatif transversal desdites spires jointives suivant lesdites surfaces de joint inclinées de manière à autoriser le fléchissement de ladite conduite.

Ainsi, une caractéristique de l'invention réside dans le mode de coopération de la structure tubulaire interne et de la couche tubulaire de blocage axial et plus précisément des spires de structure qui sont mobiles axialement avec les spires jointives qui elles sont mobiles transversalement les unes par rapport aux autres. De la sorte, la résistance de la conduite à la combinaison d'une forte compression axiale avec des flexions alternée est améliorée. La couche de blocage axial est stabilisée par sa coopération avec les spires de structure de la structure tubulaire interne, et conserve durablement son intégrité sans se désorganiser. D'autre part, cette conduite peut résister à une forte compression axiale sans se raccourcir, du fait de la présence de la couche tubulaire de blocage axial. Enfin, cette conduite conserve une flexibilité similaire à celle des conduites de l'art antérieur. Le fléchissement de la conduite est autorisé, car les spires de structure de la structure tubulaire interne peuvent se rapprocher les unes des autres à l'intérieur de la courbure tandis qu'elles s'écartent les unes des autres à l'extérieur de la courbure diamétralement opposé, et parallèlement les spires jointives sont adaptées à se déplacer transversalement les unes par rapport aux autres pour former rotule.

Avantageusement, la structure tubulaire interne comprend un fil de structure constitué d'un fil d'agrafage, par exemple un fil de forme de type zêta téta ou C, qui autorise alors un jeu axial des spires de structure agrafées tant en compression qu'en élongation dans des limites déterminées comme on l'expliquera en détail dans la suite de la description.

En outre, ledit au moins un fil profilé et ledit fil de structure sont avantageusement enroulés de manière croisée. Ceci permet d'équilibrer les couples de torsions appliqués à la conduite par ces deux couches.

Par ailleurs, lesdits flancs latéraux dudit au moins un fil profilé sont inclinés par rapport à ladite surface interne d'un angle compris entre 50° et 70°, ce qui permet d'améliorer la résistance à la compression de la conduite, tout en conservant une bonne flexibilité. Ce point sera expliqué ci après. Dans la présente demande, par convention, l'angle d'inclinaison entre deux droites concourantes est la valeur absolue de l'ouverture angulaire du plus petit des quatre secteurs angulaires définis par l'intersection des deux droites. Il est donc toujours compris entre 0° et 90°.

Selon un premier mode de mise en oeuvre de l'invention particulièrement avantageux, ledit un desdits au moins deux fil profilé ou le premier, présente une hauteur supérieure à la hauteur dudit autre desdits au moins deux fils profilés ou le second. Ainsi, les spires dudit premier fil profilé sont bloquées radialement entre les structures tubulaires interne et externe, tandis que celles dudit second fil profilé sont mobiles radialement. De plus, avantageusement, la base dudit premier fil profilé est en appui sur lesdites spires de structure de ladite structure tubulure interne. De la sorte, les spires de structure sur lesquelles sont enroulées les spires dudit premier fil profilé sont susceptibles de les entraîner elles aussi axialement, ce qui est susceptible de provoquer alors le mouvement transversal des spires dudit second fil profilé. Vers l'intérieur de la courbure de la conduite, les spires dudit second fil profilé tendent à être chassées vers l'extérieur de la conduite entre les flancs latéraux dudit premier fil profilé, tandis qu'à l'opposé vers l'extérieur de la courbure, les spires dudit second fil profilé s'encastrent plus encore vers l'intérieur de la conduite entre les flancs latéraux dudit un desdits deux fils profilés. Par conséquent, la conduite flexible est à la fois bloquée axialement en rétraction tout en restant flexible.

Ce mode de mise en oeuvre réduit fortement les risques de désorganisation de la couche de blocage, et augmente la résistance et la durabilité de la conduite. Cette amélioration résulte de l'efficacité du mode de coopération entre la couche de blocage et les spires de structure de la couche tubulaire interne. Le risque de désorganisation de la couche de blocage est lié aux forces générées par les frottements au niveau des flancs latéraux des spires jointives, lesdites forces ayant en particulier tendance à excentrer les spires par rapport à l'axe de la conduite. Or, seules les spires dudit premier fil profilé sont en appui sur les spires de structure de la structure tubulaire interne. En outre, cet appui est particulièrement stable et peut supporter des efforts radiaux importants. En effet, les spires de structure présentent une rigidité radiale importante. De plus, lorsque la conduite est fléchie, il n'y a quasiment pas de glissement entre d'une part les spires de structure et d'autre part les spires dudit premier fil profilé. Ainsi, des efforts radiaux importants peuvent être transmis à travers cet appui sans pour autant générer au niveau de cet appui de l'usure, du grippage, ou des efforts de frottement pouvant être préjudiciables au bon fonctionnement de la conduite. Enfin avantageusement, l'appui se fait du coté de la base, et non pas du sommet, dudit premier fil profilé, ce qui améliore encore la stabilité. Les spires dudit second fil profilé, quant à elles, ne sont pas en contact permanent avec les spires de structure, et ne bénéficient donc pas directement de leur effet stabilisant. Cependant, elles bénéficient d'un effet indirect de stabilisation lié aux contacts permanents, au niveau de leurs flancs latéraux, avec les spires dudit premier fil profilé. Il s'avère de plus, de façon assez surprenante, que cet effet indirect est suffisant pour stabiliser correctement les spires dudit second fil profilé.

Préférentiellement, pour chacun desdits fils profilés, la largeur de ladite base est supérieure à 1,4 fois ladite hauteur. De la sorte, lesdits fils profilés conservent une base bien parallèle à l'axe de la conduite, les risques de basculement étant réduits. Ainsi, la stabilité de la couche de blocage est améliorée.

Les performances de la conduite sont encore améliorées, ainsi qu'on l'expliquera ci-après, lorsque l'un desdits deux fils profilés présente une hauteur comprise entre 1,2 et 1,6 fois la hauteur de l'autre desdits deux fils profilés.

En outre, ledit un desdits deux fils profilés présente une section dont la surface est comprise entre 0,8 et 1,5 fois la surface dudit autre desdits deux fils profilés de façon que la résistance des deux fils soit voisine. De la sorte, ainsi qu'on l'expliquera ci-après, le poids de la couche tubulaire de blocage peut être réduit tout en conservant une capacité suffisante de résistance aux efforts de compression axiale.

Par ailleurs, la base et le sommet dudit un desdits deux fils profilés enroulés hélicoïdalement définissent respectivement deux enveloppes tubulaires coaxiales espacées l'une de l'autre et avantageusement, ledit autre desdits deux fils profilés s'étend sensiblement à équidistance desdites enveloppes tubulaires, lorsque ladite conduite flexible s'étend longitudinalement dans une position de repos. Ceci permet d'augmenter la flexibilité de la conduite en réduisant le rayon de courbure minimum que peut supporter la couche de blocage sans être endommagée.

Selon un autre aspect, la présente invention concerne également un procédé de réalisation d'une conduite flexible, ladite conduite présentant deux structures tubulaires coaxiales, respectivement interne et externe, et une couche tubulaire de blocage axial située entre lesdites structures tubulaires, ledit procédé étant du type selon lequel on fournit deux fils profilés présentant chacun une section trapézoïdale sensiblement isocèle, ladite section trapézoïdale définissant une base et deux flancs latéraux opposés inclinés l'un par rapport à l'autre, l'un desdits deux fils profilés étant enroulé hélicoïdalement à pas court de façon que ladite base soit orientée vers la structure tubulaire interne et en formant des premières spires espacées les unes des autres, tandis que l'autre desdits au moins deux fils profilés est enroulé hélicoïdalement entre lesdites premières spires espacées, ladite base opposée à ladite structure tubulaire, et flancs latéraux contre flancs latéraux en formant des spires jointives de façon à bloquer axialement en compression ladite conduite, lesdites spires jointives définissant deux surfaces de joint inclinées par rapport à l'axe de ladite conduite ; selon l'invention ledit procédé comprend en outre les étapes suivantes : a) on fournit au moins un fil de structure ; b) on enroule ledit au moins un fil de structure à pas court pour former des spires de structure bloquées transversalement les unes par rapport aux autres ; et, c) on enroule ledit un desdits deux fils profilés en appui sur lesdites spires de structure, la déformation en fléchissement de ladite couche tubulaire de blocage étant susceptible de provoquer simultanément le mouvement relatif axial desdites spires de structure et le déplacement relatif transversal desdites spires jointives suivant lesdites surfaces de joint inclinées de manière à autoriser le fléchissement de ladite conduite.

Ainsi, une caractéristique de l'invention selon cet autre aspect réside dans la mise en oeuvre d'au moins un fil de structure que l'on enroule à pas court pour former des spires de structure solidaires les unes des autres de manière à former une structure tubulaire interne présentant une rigidité radiale importante et autour de laquelle on peut enrouler au moins un fils profilé. De la sorte, la structure tubulaire interne rigide constitue une structure d'appui sur laquelle ledit fil profilé et peut être formé et enroulé.

Avantageusement, à l'étape a) on fournit un fil d'agrafage formant ledit au moins un fil de structure et à l'étape b) on enroule ledit fil d'agrafage pour former des spires agrafées les unes aux autres. De la sorte, les spires du fil d'agrafage sont solidaires les unes des autres sur toute leur circonférence et elles sont bloquées en translation selon une direction transversale. De manière préférentielle, on enroule le fil de structure selon un sens à l'étape b) et on enroule ledit au moins un fil profilé selon un sens opposé à l'étape c) de manière à croiser ledit au moins un fil profilé et ledit fil de structure. Ainsi, les couples de torsion appliqués à la conduite par d'une part la couche de blocage et d'autre part les spires du fil de structure sont de direction opposée et ont tendance à s'équilibrer.

Selon un autre mode de mise en oeuvre de l'invention, permettant d'ajuster correctement les fils profilés et lorsqu'ils présentent des irrégularités, l'étape c) comprend les étapes suivantes : on fournit deux fils profilés de section sensiblement trapézoïdale isocèle, lesdits fils profilés présentant une base et un sommet opposé lesdits flancs latéraux correspondant aux surfaces non parallèles desdits fils profilés ; on enroule l'un desdits deux profilés sur ladite structure tubulaire interne en appliquant la base dudit un desdits profilés sur la structure tubulaire interne de manière à former des spires espacées les unes des autres d'un premier pas ; on enroule l'autre desdits deux profilés entre lesdites spires espacées en appliquant le sommet dudit autre desdits deux profilés en regard de ladite structure tubulaire de façon que les bases desdits deux profilés soient respectivement opposées l'une de l'autre ; et enfin, on enfonce l'autre desdits deux profilés de façon à écarter lesdites spires d'un pas supérieur au premier pas. Autant que faire se peut, on enfonce l'autre desdits deux profilés de manière à l'ajuster à équidistance de la base et du sommet dudit un desdits deux profilés.

Préférentiellement, lorsque le second fil profilé a été trop profondément enfoncé entre les deux spires consécutives du premier fil profilé, on entraîne alors en translation ledit un desdits deux profilés pour rapprocher lesdites spires l'une de l'autre de façon à écarter ledit autre desdits deux profilés de ladite structure tubulaire, et ainsi le réajuster à équidistance de la base et du sommet dudit un desdits deux profilés.

Par ailleurs, selon un mode de réalisation de l'invention particulièrement avantageux, l'étape c) comprend les étapes suivantes : on fournit deux fils profilés de section sensiblement trapézoïdale isocèle, lesdits fils profilés présentant une base et un sommet opposé, lesdits flancs latéraux correspondant aux surfaces non parallèles desdits fils profilés; puis on enroule l'un desdits deux profilés sur ladite structure tubulaire interne en appliquant la base dudit un desdits profilés sur la structure tubulaire interne de manière à former des spires espacées les une des autres d'une distance déterminée ; on maintient alors lesdites spires à ladite distance déterminée ; et ensuite, on enroule l'autre desdits deux profilés entre lesdites spires espacées en appliquant le sommet dudit autre desdits deux profilés en regard de ladite structure tubulaire de façon que les bases desdits deux profilés soient respectivement opposées l'une de l'autre. On expliquera plus en détail dans la description détaillée qui va suivre, ce mode de réalisation particulier.

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
- la Figure 1 est une vue schématique partielle en perspective d'une conduite flexible conforme à l'invention ;
- la Figure 2 est une vue schématique partielle en coupe axiale d'une portion de la conduite flexible illustrée sur la Figure 1 ;
- la Figure 3 est une vue schématique de détails montrant deux éléments représentés sur la Figure 2 ;
- la Figure 4 est une vue schématique partielle en coupe axiale d'éléments représentés sur la Figure 1, dans une position active ;
- la Figure 5 est une vue schématique partielle illustrant une première étape de réalisation d'une conduite flexible selon l'invention ;
- la Figure 6 est une vue schématique partielle illustrant une deuxième étape de réalisation de la conduite flexible selon l'invention ;
- la Figure 7 est une vue schématique partielle illustrant une troisième étape de réalisation de la conduite flexible selon l'invention ;
- la Figure 8 est une vue schématique partielle montrant une première étape d'un autre mode de réalisation d'une conduite flexible ;
- la Figure 9 est une vue schématique partielle illustrant une deuxième étape dudit autre mode de réalisation ;
- la Figure 10 est une vue schématique partielle illustrant une troisième étape dudit autre mode de réalisation ; et,
- la Figure 11 est une vue schématique partielle montrant une variante selon ledit autre mode de réalisation.

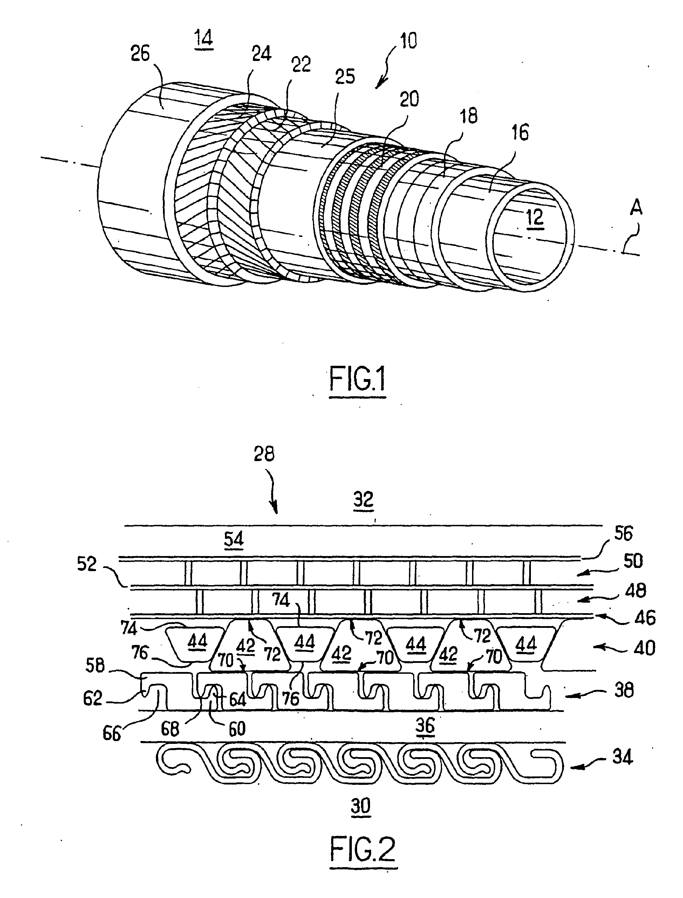

La Figure 1 illustre une conduite flexible 10 selon l'invention du type «smooth-bore » et qui présente ici, de l'intérieur de la conduite 12 vers l'extérieur 14, une gaine d'étanchéité interne 16 en matière plastique, une voûte de pression agrafée 18, une couche tubulaire de blocage 20, deux nappes d'armures croisées 22, 24 séparées de la couche tubulaire de blocage 20 par une gaine intermédiaire 25, et une gaine d'étanchéité externe 26. La conduite flexible 10 s'étend ainsi longitudinalement selon l'axe A. La voûte de pression agrafée 18 et la couche tubulaire de blocage 20 sont réalisées grâce à des éléments longitudinaux enroulés hélicoïdalement à pas court en formant des spires, non jointives pour la voûte de pression 18 et jointives pour la couche tubulaire de blocage 20, tandis que les nappes d'armures croisées 22, 24 sont formées d'enroulements hélicoïdaux à pas long de fils métalliques.

Dans d'autres types de structures du type «rough-bore » une carcasse métallique est montée à l'intérieur de la gaine d'étanchéité interne 16 et la gaine intermédiaire 25 est supprimée.

Il en est ainsi de la portion de conduite 28 représentée en hémi-coupe axiale et illustrée sur la Figure 2. Elle présente de l'intérieur 30 vers l'extérieur 32, une carcasse 34 formée d'un feuillard métallique profilé et enroulée en spires agrafées les unes aux autres et permettant de reprendre les efforts radiaux d'écrasement, une gaine d'étanchéité 36 en matière plastique, une voûte de pression 38 faite d'un fil de forme en zêta enroulé hélicoïdalement à pas court et agrafé ; une couche tubulaire de blocage 40 présentant ici deux fils profilés 42 et 44 que l'on détaillera ci-après, une première bande anti-usure 46, deux fils d'armures 48 et 50 séparés par une deuxième bande anti-usure 52 et une gaine externe 54 en matière plastique séparée des fils d'armures par une bande de rétention 56. Les bandes anti-usure ont pour fonction de limiter l'usure et le frottement entre couches métalliques adjacentes. La bande de rétention a pour unique fonction de maintenir les nappes d'armures pendant la fabrication de la conduite, jusqu'à ce que la gaine externe soit posée. Cette bande de rétention est différente de part sa structure et sa fonction des rubans renforcés de fibres aramides décrit dans WO 03/083343. Elle présente une résistance mécanique beaucoup plus faible et ne serait pas capable de limiter ou de contrôler en service le gonflement des nappes d'armures dans des conditions similaires à celles décrites dans WO 03/083343. Le fil de forme en zêta présente deux bords opposés 58 et 60 terminés respectivement par des retours 62, 64 qui délimitent deux rainures opposées 66 et 68. Quant à la couche tubulaire de blocage 40, elle présente un premier fil profilé 42 et un second fil profilé 44 de hauteur inférieure, tous les deux de section trapézoïdale sensiblement isocèle. Le premier fil profilé 42 présente une première base 70 dénommée aussi surface interne, et un premier sommet opposé 72 et le second fil profilé 44 présente lui, une seconde base 74 opposée à un second sommet 76. En outre, comme on l'expliquera ci-dessous plus en détail, les deux fils profilés 42 et 44, présentent une section avec respectivement deux flancs latéraux inclinés l'un vers l'autre d'un angle par rapport à leur base respective, 70, 74, sensiblement égal.

Il est avantageux dans certaines applications particulières, de ménager des flancs latéraux sensiblement convexes, dans le premier fil profilé 42 et en correspondance, des flancs latéraux concaves dans le second fil profilé 44. En effet, ceci permet de créer des portées sphériques entre fils profilés voisins, ce qui facilite les mouvements relatifs de rotule accompagnant la flexion de la conduite, et permet de réduire les pressions de contact. La courbure idéale de chaque flanc latéral, vue en coupe transversale, est un cercle centré sur l'intersection entre l'axe de la conduite et la médiatrice dudit flanc latéral. En pratique; pour les conduites destinées à des profondeurs d'eau inférieures à 2500m, le ratio entre l'épaisseur de la couche de blocage axial et le diamètre de la conduite est tel que le rayon de ce cercle est très supérieur à la hauteur du fil profilé. Dans ces conditions, l'écart maximal entre d'une part le flanc courbé optimal et d'autre part le flanc incliné rectiligne est négligeable et ne justifie pas la mise en oeuvre de ce perfectionnement. Du fait de ce faible écart maximal, de l'ordre de quelques centièmes de millimètres, le phénomène d'usure et de rodage crée naturellement des portées sphériques proches des portées optimales. Cependant, ce perfectionnement est avantageux dans le cas de conduites destinées à être immergées à de très grandes profondeurs, typiquement plus de 3500m, et qui sont de ce fait soumises à des efforts extrêmement importants de compression axiale.

Telle que représentée sur la Figure 2, la conduite 28 s'étend longitudinalement dans une position de repos. On notera que dans cette position de repos, le premier fil profilé 42 qui forme des spires autour de la voûte de pression 38, présente sa première base 70 en appui sur les spires de la voûte de pression 38, tandis que les fils d'armures 48 et 50 et la première bande anti-usure 46 sont elles, en appui sur le premier sommet 72, alors que le second fil profilé 44 est encastré en formant coin, entre les spires formées par le premier fil profilé 42. La seconde base 74 et le second sommet 76 du second fil profilé 44, sont alors respectivement opposés de la première base 70 et du premier sommet 72 du premier fil profilé 42. La hauteur du second fil profilé 44 étant moindre que celle du premier fil profilé 42, ce second fil profilé 44 est enroulé hélicoïdalement entre les spires du premier fil profilé 42, flancs contre flancs, de façon que son second sommet 76 et sa seconde base 74 soit respectivement espacés sensiblement d'une même valeur de la voûte de pression 38 et de la première bande anti-usure 46. Par ailleurs, on notera que dans cette position de repos, le retour 62, 64 des bords opposés 58 et 60 du fil de forme en zêta sont respectivement engagés au milieu de leurs rainures contiguës 68, 62. De la sorte, la voûte de pression 38 présente un jeu axial, tant en compression qu'en élongation.

De plus, les spires du premier fil profilé 42 sont en appui sur la voûte de pression 38, soit directement comme représentées sur la Figure 2, soit par l'intermédiaire d'une bande en matériau synthétique, de façon que les forces de frottement entre le fil profilé 42 et le fil de forme en zêta de la voûte de pression 38 soient suffisamment importantes pour que le mouvement axial des spires de la voûte de pression 38 soit susceptible d'entraîner les spires du premier fil profilé 42. Par ailleurs, grâce à cette couche tubulaire de blocage 40 on comprend que toute contrainte axiale tendant à rétracter la conduite 10 telle qu'illustrée sur la Figure 1 serait reprise par les spires des deux fils profilés 42, 44, en appui flancs contre flancs. Cette compression axiale, du fait de l'effet de coin produit par l'inclinaison des flancs, génère dans les deux fils profilés des contraintes circonférentielles de sens opposé, qui tendent à faire diminuer légèrement le diamètre des spires du premier fil profilé 42, et à faire augmenter légèrement celles du second fil profilé 44. La couche de blocage est conçue de telle sorte que ces contraintes ne dépassent jamais la limite élastique des fils, si bien que les déformations restent réversibles et faibles. En pratique, sous l'application d'une compression axiale, la couche de blocage et la conduite peuvent se raccourcir réversiblement d'une valeur relative inférieure à 0,3%, avantageusement 0,15%. Dans ces conditions, le gonflement des nappes d'armures reste inférieur, en valeur relative, à approximativement 0,6%. Ainsi, les déplacements radiaux des fils d'armure restent nettement inférieurs à leur propre épaisseur, ce qui évite tout risque de désorganisation des nappes d'armures.

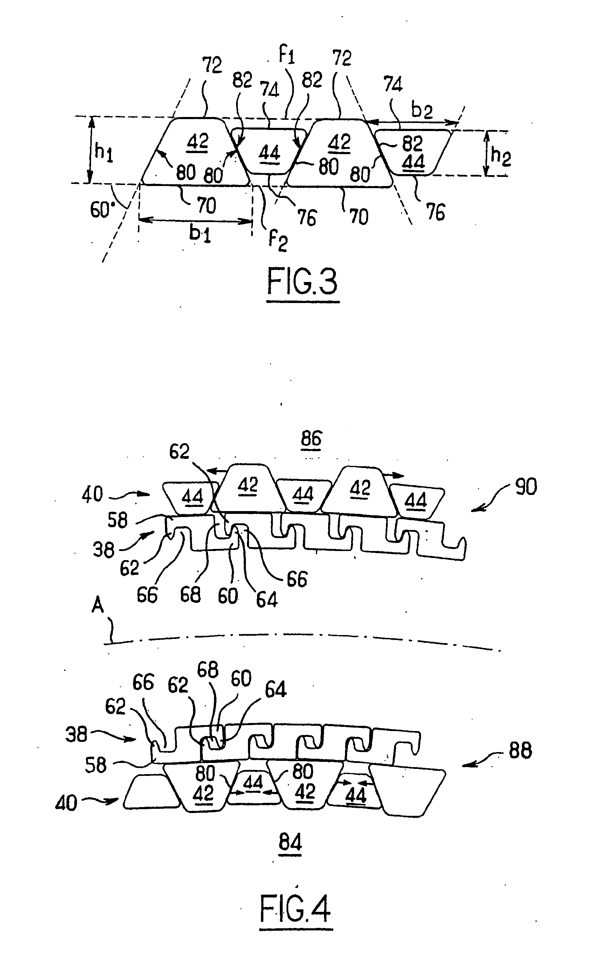

On se référera maintenant à la Figure 3, qui montre partiellement en hémi-coupe axiale de la conduite flexible dans une position de repos et en section droite des fils profilés, deux spires du premier fil profilé 42 et du second fil profilé 44, encastrées l'une dans l'autre. On expliquera à l'appui de cette Figure 3, la géométrie, la constitution et l'agencement des deux fils profilés 42, 44 l'un par rapport à l'autre dans la couche tubulaire de blocage 40.

Ces fils profilés 42,44 sont réalisés en acier et formés par tréfilage ou par laminage à froid de manière à obtenir des fils présentant de bonnes caractéristiques mécaniques et de bonnes tolérances dimensionnelles à un coût avantageux. La limite élastique en traction des fils ainsi réalisés est avantageusement supérieure à 800 MPa. Par ailleurs, ainsi qu'on l'expliquera ci-après, leur état de surface doit être suffisant, pour autoriser le glissement d'un fil par rapport à l'autre. Avantageusement, la rugosité moyenne Ra des flancs latéraux des fils est inférieure à 3,2 µm. Préférentiellement, les flancs latéraux sont enduits d'une graisse pour réduire plus encore les coefficients de frottement.

On retrouve sur la Figure 3 le premier fil profilé 42 présentant sa première base 70 et son premier sommet 72, et deux flancs latéraux opposés 80. On y retrouve également le second fil profilé 44 présentant sa seconde base 74 et son second sommet 76 ainsi que deux flancs latéraux opposés 82. Les dimensions des fils profilés 42, 44 sont adaptées notamment en fonction du diamètre de la conduite flexible, du rayon de courbure minimum auquel la conduite doit être courbée, et de la profondeur d'eau dans laquelle elle doit être utilisée

Ainsi, les angles d'inclinaison entre d'une part les flancs latéraux opposés 80 et la première base 70, et d'autre part les flancs latéraux opposés 82 et la seconde base 74, sont sensiblement égaux et compris entre 50° et 70°, avantageusement 55° et 65°, et de façon optimale voisins de 60°, ce qui permet d'obtenir une couche de blocage présentant à la fois une grande résistance à la compression et une bonne flexibilité. En effet, lorsque ces angles augmentent en se rapprochant de 90°, l'effet de coin est réduit, les contraintes circonférentielles dans les fils profilés sont donc réduites et la résistance à la compression axiale de la couche de blocage est améliorée. Cependant, au-delà de 75°, il y a risque de grippage et de blocage par absence de glissement entre les faces latérales des fils profilés. De plus, dès lors que les hauteurs h1, h2 des deux fils profilés 42,44 sont fixées, une diminution de l'angle diminue le rayon de courbure minimum auquel la couche de blocage peut être courbée sans dommage, ce qui revient à dire que la flexibilité de la couche de blocage est d'autant meilleure que cet angle est faible. Finalement, un angle voisin de 60° offre un compromis optimal.

De plus, les arêtes des fils profilés 42, 44 sont arrondies ou chanfreinées de façon que leur mouvement relatif n'altère pas les couches adjacentes et que leur glissement relatif s'effectue avec le moins de frottement possible.

Préférentiellement, la largeur b1 de la base du premier fil profilé 42 est supérieure à 1,4 fois sa hauteur h1. De même, avantageusement, la largeur b2 du second fil profilé 44 est supérieure à 1,4 fois sa hauteur h2. Ainsi, la stabilité des fils profilés 42,44 est améliorée, ces derniers conservant durablement une base parallèle à l'axe de la conduite lorsque cette dernière s'étend longitudinalement.

La hauteur h1 du premier fil profilé 42 est avantageusement comprise entre 1,2 et 1,6 fois la hauteur h2 du second fil profilé 44. En effet, dès lors que tous les autres paramètres sont fixés, une augmentation du ratio h1/h2 a pour effet d'augmenter la flexibilité de la couche de blocage par le biais d'une augmentation de la course de déplacement radial du second fil profilé h2 par rapport au premier fil profilé h1. Cependant, cette augmentation diminue la section du second fil profilé et donc la résistance à la compression de la couche de blocage. Finalement, le meilleur compromis est obtenu lorsque h1/h2 est compris entre 1,2 et 1,6.

En outre, le premier fil profilé 42 présente avantageusement une section dont la surface est comprise entre 0,8 et 1,5 fois la surface de la section du second fil profilé 44. De la sorte, les contraintes circonférentielles de compression et de traction endurées respectivement par les fils profilés 42 et 44 sont homogènes et ont des intensités voisines. Ceci permet d'améliorer la couche de blocage en réduisant son poids à résistance égale à la compression axiale.

Préférentiellement, la surface de la section du premier fil profilé 42 est comprise entre 1 et 1,3 fois, par exemple 1,2 fois la surface de la section du second fil profilé 44.

Le premier fil profilé 42 présente par exemple une hauteur h1 comprise entre 4 mm et 14 mm et une largeur b1 de première base 70 comprise entre 6 mm et 24 mm, pour des conduites de diamètre interne compris entre 100 mm et 250 mm devant être immergées à des profondeurs d'eau comprises entre 1000 et 1500m. Dans ces mêmes conditions, la hauteur h2 du second fil profilé 44 est par exemple comprise entre 2,5 mm et 11 mm et la largeur b2 de la seconde base 74 est comprise entre 7,5 mm et 27 mm.

Ainsi, par exemple, pour une conduite flexible de diamètre interne 150mm, destinée à être immergée à 1500m de profondeur, la hauteur h1 du premier fil profilé 42 est de 8,2 mm, la largeur b1 de la première base 70 est de 14,1 mm, la hauteur h2 du second fil profilé 44 étant de 6 mm et la largeur b2 de la seconde base 74, étant de 16,2 mm.

Ainsi qu'on l'a déjà exprimé ci-dessus, lorsque la conduite flexible s'étend longitudinalement dans une position de repos, les spires du premier fil profilé 42 et du second fil profilé 44 définissent respectivement deux enveloppes coaxiales. De plus, avantageusement, le second fil profilé 44 s'étend à équidistance de la première base 70 et du premier sommet 72 du premier fil profilé 42, ce qui présente l'avantage de réduire le rayon de courbure minimum de la couche de blocage. Par conséquent, en reprenant l'exemple précité, et en s'appuyant sur la Figure 3, la seconde base 74 et le second sommet 76 du second fil profilé 44 doivent être respectivement espacés d'une distance de 1,1 mm d'une première ligne 11 définie par le premier sommet 72 du premier fil profilé 42 et d'une seconde ligne 12 définit la première base 70 du premier fil profilé 42. On expliquera plus en détail en référence au procédé de réalisation de la conduite flexible, la manière d'obtenir cette coaxialité.

On se référera maintenant à la Figure 4, sur laquelle est représentée en coupe axiale, une portion de conduite conforme à l'invention et uniquement sa voûte de pression 38 sur laquelle s'appuie sa couche tubulaire de blocage 40. Cet ensemble est représenté alors que la conduite est fléchie en définissant un intérieur de flexion 84 et un extérieur de flexion 86. Ainsi, vers l'intérieur de flexion 84 une première portion de conduite 88 est contractée tandis que vers l'extérieur de flexion 86 une seconde portion de conduite 90 diamétralement opposée est étendue. On expliquera ci-dessous, les conséquences structurelles sur la voûte de pression 38 et sur la couche tubulaire de blocage 40, et le déplacement relatif de leurs éléments respectifs.

Ainsi, vers l'intérieur de flexion 84, la première portion de conduite 88 s'est contractée et les spires du fil de forme en zêta sont en butées les unes contre les autres, tandis qu'à l'opposé vers l'extérieur de flexion 86, la seconde portion de conduite 90 s'est étendue, les retours 62, 64 des bords opposés 58, 60 étant respectivement en prise l'un dans l'autre. Aussi, dans la première portion de conduite 88 les spires se sont rapprochées les unes des autres, tandis que dans la seconde portion 90 les spires se sont éloignées les unes des autres. Par conséquent, le premier fil profilé 42 étant enroulé hélicoïdalement en appui sur la voûte de pression 38, les spires du fils de forme en zêta ont parallèlement entraîné les spires du premier fil profilé 42, de telle sorte que, dans la première portion de conduite 88 les spires du premier fil profilé 42 ont été rapprochées les unes des autres tandis qu'à l'opposé, dans la seconde portion de conduite 90, les spires du premier fil profilé 42 ont été éloignées les unes des autres. Cela a alors mécaniquement pour effet d'entraîner dans une direction transversale les spires du second fil profilé 44 vers l'intérieur de flexion 84. En effet, dans la première portion de conduite 88, les spires du premier fil profilé 42, dont les flancs latéraux 80 sont inclinés se rapprochent les unes des autres et tendent à chasser les spires du second fil profilé 44 vers l'intérieur de flexion 84, les spires coulissant le long des surfaces de joint définies par les flancs latéraux 80, 82. Simultanément, dans la seconde portion de conduite 90 à l'opposé, les spires du premier fil profilé 42 s'écartant les unes des autres, les spires du second fil profilé 44 coulissent flancs contre flancs entre les spires du premier fil profilé 42 vers la voûte de pression 38.

Ainsi, les flexions de la conduite 10 sont autorisées sans raccourcissement global de cette dernière, les spires des deux fils profilés 42, 44 formant alors des rotules les unes par rapport aux autres. Ces flexions ne sont limitées en amplitude que par la venue en appui du second sommet 76 du second fil profilé 44 contre la voûte de pression et parallèlement à l'opposé, par la venue en appui de la seconde base 74 du second fil profilé 44 contre la couche de fil d'armure 48 et la gaine anti-usure 46.

Selon une première variante de mise en oeuvre de l'invention non représentée, les fils profilés 42, 44 sont enroulés de façon que leur base et leur sommet respectif soient inversés par rapport à la voûte de pression 38, telle qu'illustrée sur la Figure 2. En outre, et selon une deuxième variante de mise en oeuvre, on prévoit de fournir un premier fil profilé en deux parties symétriques l'une de l'autre par rapport à un plan médian de manière à simplifier le montage. Avantageusement, et selon une troisième variante de mise en oeuvre, les fils profilés présentent des évidements longitudinaux dans leur base et/ou dans leur sommet, et à l'intérieur de leur face de contact dans le cas d'un premier fil profilé en deux parties symétriques, en laissant intact les flancs latéraux, de manière à alléger la couche tubulaire de blocage sans altérer ses parties fonctionnelles.

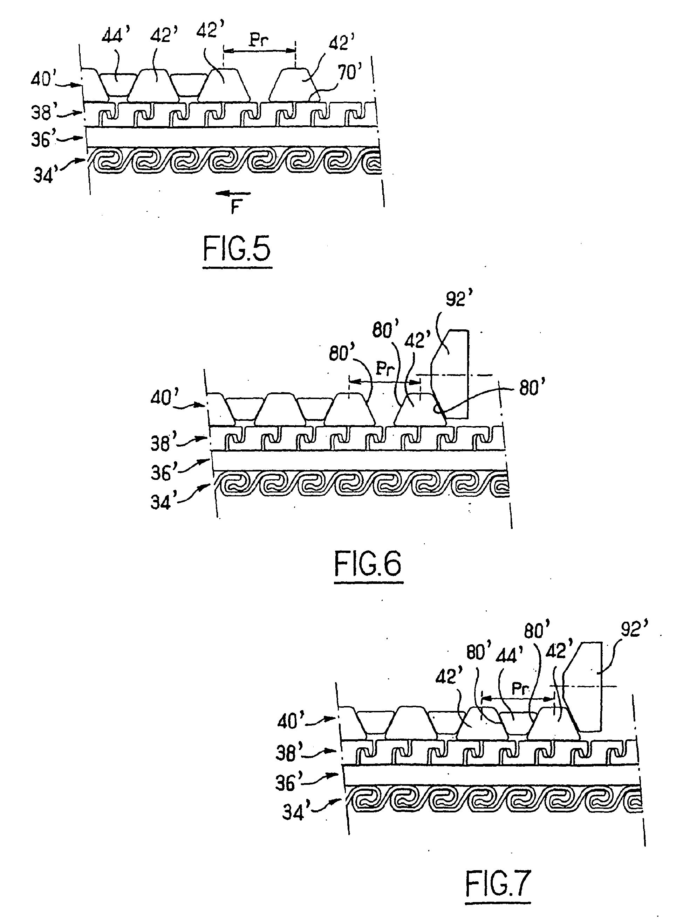

La conduite flexible conforme à l'invention est réalisée selon un procédé que l'on décrira ci-après en référence aux Figures 5 à 7. Sur ces Figures, est représentée schématiquement en hémi-coupe axiale une conduite flexible du type de celle illustrée sur la Figure 2 en cours de réalisation. Aussi, les références portant sur les éléments identiques seront affectées d'un signe prime « ` ». Une telle conduite est réalisée couche par couche en partant de l'intérieur pour aller vers l'extérieur. La carcasse 34' est fabriquée par enroulement hélicoïdal et agrafage d'un feuillard métallique profilé. Ensuite la gaine d'étanchéité 36' est fabriquée par extrusion. L'étape suivante est la fabrication de la voûte de pression 38', par enroulement hélicoïdal à pas court d'un ou plusieurs fils, à l'aide d'une spiraleuse (« spiraling machine » en langue anglaise). Ensuite, la couche de blocage 40' est fabriquée à l'aide d'une spiraleuse selon un procédé qui sera détaillé ci-dessous. Pour finir, les autres couches, à savoir d'une part les nappes d'armures 48', 50', les diverses bandes anti-usure 46', 52' et de rétention 56', et d'autre part la gaine externe 54' sont fabriquées de façon classique, respectivement par enroulement hélicoïdal de fils ou de rubans, ou par extrusion.

Sur la Figure 5, on retrouve une carcasse 34' recouverte d'une gaine de pression 36' sur laquelle est enroulé en spirale un fil de forme en zêta formant une voûte de pression 38', ces couches ayant été préalablement fabriqués de manière classique. La couche de blocage 40' est représentée en cours de fabrication, lors de son passage dans la spiraleuse. La spiraleuse est fixe et la conduite est entraînée en translation dans le sens de la flèche F. En sortie de spiraleuse, la couche de blocage 40' est formée. Tout d'abord, et selon une première étape, le premier fil profilé 42' est enroulé en hélice autour de la voûte de pression 38', sous tension contrôlée, de manière à serrer les spires ainsi formées et les rendre solidaires de la voûte de pression 38'. La base 70' du premier fil profilé 42' est monté en appui contre la voûte de pression 38'. En outre, le pas de l'hélice Pr du premier fil profilé 42' est précisément contrôlé.

Ensuite, et selon une deuxième étape illustrée sur la Figure 6, on vient bloquer en translation axiale la dernière spire du premier fil profilé 42' enroulé en appliquant des moyens formant galet 92' contre un flanc externe latéral 80' du premier fil profilé 42' de cette dernière spire.

Puis, selon une troisième étape illustrée sur la Figure 7, on vient enrouler sous tension contrôlée une nouvelle spire du second fil profilé 44' entre les deux flancs latéraux libres 80' du premier fil profilé 42'. Cette nouvelle spire du second fil profilé 44' vient alors s'ajuster exactement entre la base et le sommet du premier fil profilé 42'. Cet ajustement est d'autant plus précis, que d'une part la section des fils profilés 42' et 44' est constante et que la position de la dernière spire du premier fil profilé 42' est maintenue à une distance constante correspondant au pas Pr durant le processus de réalisation. Le galet 92' permet de garder ce pas Pr constant lors de l'application du second fil profilé 44' entre les spires du premier fil profilé 42'. En effet, du fait de l'effet de coin, la tension de pose exercée sur le second fil profilé 42' produit une force tendant à écarter les deux dernières spires du premier fil profilé 44', force qui est reprise partiellement par le galet 92'.

Le processus de réalisation de la couche tubulaire de blocage 40' est continu et les deux fils profilés 42' et 44' sont enroulés simultanément autour de la voûte de pression 38' au fur et à mesure de la rotation de la spiraleuse. Le ou les galets 92' formant moyens de contrôle de l'écartement des spires sont montés solidaires de la cage de la spiraleuse, de façon à rester en permanence à proximité du point de pose du second fil profilé 42'

Avantageusement, la spiraleuse est du type de celle décrite dans le document WO 02/081111. En effet, cette spiraleuse comporte des tractionneurs linéaires motorisés, embarqués sur la cage en rotation, qui permettent d'amener les fils profiles 42',44' jusqu'à leur point de pose en contrôlant précisément la tension de pose. De plus, le contrôle des tensions de pose permet de garantir la qualité des appuis mécaniques entre d'une part la base du premier fil profilé 44' et la voûte de pression 38', et d'autre part les flancs latéraux 80',82' des deux fils profilés 42', 44'. Or, la qualité de ces appuis est déterminante pour la fiabilité et la durabilité de la couche de blocage axial.

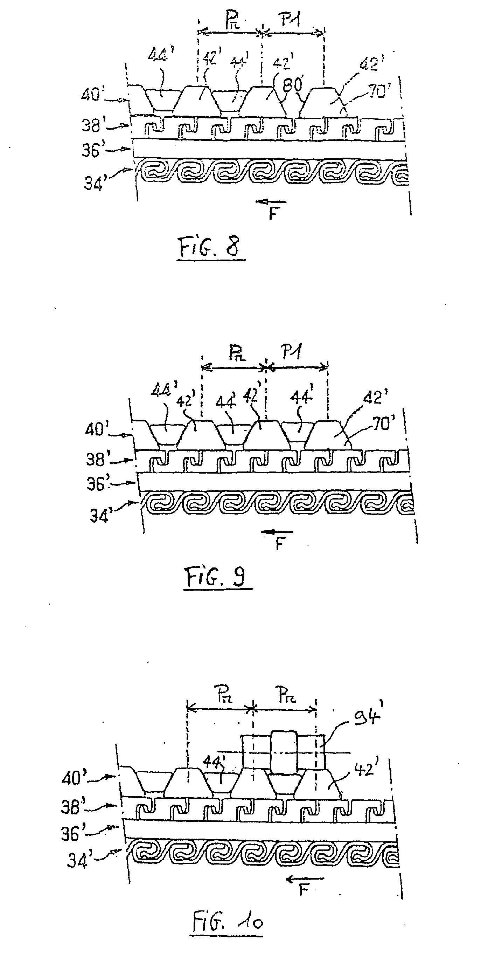

On décrira à présent, en référence aux figures 8 à 10, un procédé de réalisation d'une conduite conforme à l'invention selon un autre mode de mise en oeuvre, en trois étapes également.

Ainsi, en référence à la figure 8, sur laquelle apparaissent les mêmes éléments que ceux qui apparaissent sur la figure 5, et affectés des mêmes références, le fil profilé 42' est originellement enroulé en hélice selon une première étape, grâce à la spiraleuse, avec un pas d'hélice P1 inférieur au pas d'hélice Pr du fil profilé 42' définitivement installé, avantageusement P1 est légèrement inférieur à Pr, par exemple de cinq à dix pour cent. Grâce à la spiraleuse, en faisant varier sa vitesse de rotation en fonction de l'avancement de la conduite flexible qui la traverse, on règle la longueur du pas d'hélice. Ainsi, par rapport aux vitesses combinées de rotation de la spiraleuse et d'avancement de la conduite flexible, conduisant le premier fil profilé 42' à être enroulé avec un pas Pr, le nouveau pas d'hélice P1 est obtenu, soit en augmentant la vitesse de la spiraleuse soit en diminuant la vitesse d'avancement de la conduite flexible.

Simultanément, et selon une seconde étape illustrée à la figure 9, on vient enrouler le second fil profilé 44' en formant une nouvelle spire entre les deux flancs latéraux libres 80' du premier fil profilé 42'. Cette nouvelle spire du second fil profilé 44', vient alors s'ajuster non plus exactement entre la base et le sommet du premier fil profilé 42', mais bien plutôt vers le sommet du premier fil profilé 42' avec un pas d'hélice originel P1 sensiblement identique au pas d'hélice du premier fil profilé 42'.

Puis, selon une troisième étape illustrée sur la figure 10, on vient porter cette nouvelle spire du second fil profilé 44' exactement entre la base et le sommet du premier fil profilé 42', grâce à un rouleau 94'. Ce rouleau 94', de symétrie cylindrique de révolution, présente deux portées d'appui identiques et symétriques l'une de l'autre par rapport à un collet central. Il est monté à rotation selon un axe sensiblement parallèle à l'axe de la conduite flexible. Le collet central présente une largeur sensiblement inférieure à un demi pas d'hélice P1 et une épaisseur radiale sensiblement égale à la moitié de la différence entre la hauteur h1 premier fil profilé 42' et celle h2 du second fil profilé 44'.

Ainsi, selon cette troisième étape où le rouleau 94' est appliqué à force contre la couche tubulaire de blocage 40' de façon que ses deux portées d'appui identiques soient respectivement en appui contre deux spires consécutives du premier fil profilé 42', tandis que le collet central vient s'ajuster précisément entre ces deux spires consécutives, le rouleau 94' précisément, enfonce à force le second fil profilé 44' entre les deux spires consécutives du premier profilé 42'. Le second fil profilé 44' s'enfonce alors jusqu'à une profondeur déterminée par l'épaisseur radiale du collet. Et compte tenu de cette épaisseur radiale, valant la moitié de la différence entre h1 et h2, le second fil le profilé 44', en prenant appui sur la première des deux spires consécutives du premier fil profilé 42', tend à écarter en formant coin, la dernière spire du premier fil profilé 42' pour la porter à une distance de la première, égale au pas Pr.

De la sorte, on s'affranchit à la fois des variations dimensionnelles des fils profilés et de leur irrégularité de structure. En effet, le pas d'hélice étant déterminé et figé par les vitesses de rotation de la spiraleuse et d'avancement de la conduite flexible, des irrégularités dimensionnelles trop importantes des fils profilés entraîneraient un mauvais positionnement du second fil profilé 44' par rapport au premier fil profilé 42', soit trop proche de la voûte de pression 38' soit trop éloigné. Ainsi, cette méthode permet alors d'ajuster à tout moment par l'intermédiaire du rouleau 94', les spires à un pas Pr.

Cependant, les écarts dimensionnels et géométriques des fils profilés sont relativement faibles, car ils sont obtenus par tréfilage ou bien par laminage à froid. Par conséquent, il est inutile de prévoir un pas P1 bien inférieur au pas optimal Pr. Aussi, un pas P1 proche du pas optimal Pr, par exemple inférieur de cinq à dix pour cent du pas Pr, convient parfaitement. Un tel choix de pas P1 permet tout à la fois de compenser les ajustements nécessaires dus aux tolérances dimensionnelles et géométriques, et aussi de ne pas provoquer de mouvements importants des spires et ainsi les détériorer, ou détériorer les couches qui les supportent.

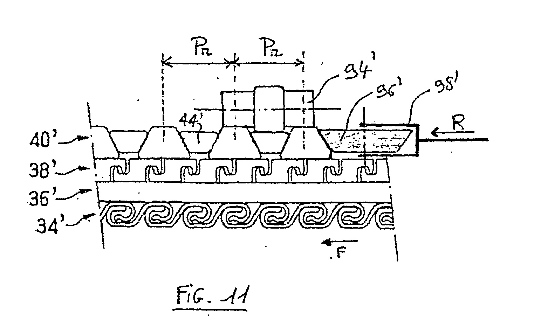

Selon une variante d'exécution de cet autre mode de mise en oeuvre, illustré sur la figure 11, le rouleau 94' est complété par la mise en oeuvre d'un galet presseur latéral 96' qui permet de contrôler précisément la course de la dernière spire du premier fil profilé 42' lorsqu'elle s'écarte sous l'action du rouleau 94' et de son collet. Pour cela, le galet presseur latéral 96' est monté à rotation sur un support 98' selon un axe sensiblement perpendiculaire à la conduite flexible, et il présente une forme tronconique de manière à ce que sa bande de roulement vienne s'appliquer exactement contre le flanc latéral incliné du premier fil profilé 42'. Le galet presseur latéral 96' est alors entraîné en translation à force par l'intermédiaire de son support 98', contre le flanc latéral incliné du premier fil profilé 42' selon une direction parallèle à l'axe de la conduite flexible et avec une intensité comprise, par exemple entre 10 daN et 50 daN. Le support 98' peut être entraîné selon un sens R par l'intermédiaire d'un ressort ou bien d'un vérin. Ainsi, dans le cas où le second fil profilé 44' est enfoncé trop profondément entre deux spires consécutives du premier fil profilé 42', par exemple à cause d'un élément qui s'est engagé fortuitement entre le second fil profilé 44' et le collet du rouleau 94', ou encore à cause de la tension du second fil profilé 44', il serait alors remonté et écarté de la voûte de pression 38' grâce à l'action du galet presseur latéral 96'. Ce dernier viendrait en effet, entraîner en translation la dernière spire du premier fil profilé 42', selon la direction parallèle à la conduite flexible, et partant, par effet de coin inverse, faire remonter le second fil profilé 44' et l'éloigner de la voûte de pression 38'.

Par ailleurs, on observera que le rouleau 94' et le galet presseur latéral 96', peuvent être mis en oeuvre simultanément de façon à contrôler parfaitement la position relative du second fil profilé et du premier fil profilé.

## Revendications

1. Conduite flexible (10) de transport des hydrocarbures, ladite conduite présentant deux structures tubulaires coaxiales, respectivement interne (16, 18 ; 34, 36, 38) et externe (22, 24, 25, 26 ; 46, 48, 50, 52, 54, 56), et une couche tubulaire de blocage axial (20 ; 40) située entre lesdites structures tubulaires, ladite couche tubulaire de blocage (20 ; 40) comprenant au moins deux fils profilés (42, 44) enroulés hélicoïdalement à pas court, lesdits au moins deux fils profilés (42, 44) présentant chacun une section trapézoïdale sensiblement isocèle, ladite section trapézoïdale définissant une base (70, 74) et deux flancs latéraux opposés (80, 82) inclinés l'un par rapport à l'autre, ladite base (70) de l'un desdits au moins deux fils profilés étant orientée vers la structure tubulaire interne (18 ; 38), tandis que ladite base (74) de l'autre desdits au moins deux fils profilés est orientée à l'opposé de ladite structure tubulaire interne (18, 38), lesdits au moins deux fils profilés étant enroulés flanc latéral contre flanc latéral en formant des spires jointives de façon à bloquer axialement en compression ladite conduite, lesdites spires jointives définissant deux surfaces de joint inclinées par rapport à l'axe de ladite conduite ;
**caractérisée en ce que** ladite structure tubulaire interne (18 ; 38) comprend un fil de structure enroulé à pas court pour former des spires de structure bloquées transversalement les unes par rapport aux autres ;
et **en ce que** ledit un desdits au moins deux fil profilé (42) est enroulé en appui sur lesdites spires de structure de façon que la déformation en fléchissement de ladite couche tubulaire de blocage (20,40) provoque simultanément le mouvement relatif axial desdites spires de structure et le déplacement relatif transversal desdites spires jointives suivant lesdites surfaces de joint inclinées de manière à autoriser le fléchissement de ladite conduite (10).

2. Conduite flexible selon la revendication 1, **caractérisée en ce que** ledit fil de structure est constitué d'un fil d'agrafage, ledit fil d'agrafage formant des spires agrafées.

3. Conduite flexible selon la revendication 1 ou 2, **caractérisée en ce que** ledit un desdits au moins deux fil profilé (42) et ledit fil de structure sont enroulés de manière croisée.

4. Conduite flexible selon l'une quelconque des revendications 1 à 3, **caractérisée en ce que** lesdits flancs latéraux (80, 82) sont inclinés par rapport à ladite base (70, 74) d'un angle compris entre 50° et 70°.

5. Conduite flexible selon l'une quelconque des revendications 1 à 4, **caractérisée en ce que** ledit un desdits au moins deux fil profilé (42) présente une hauteur (h1) supérieure à la hauteur (h2) dudit autre desdits au moins deux fils profilés (44).

6. Conduite flexible selon la revendication 5, **caractérisée en ce que** chacun desdits fils profilés (42, 44) présentent une largeur (b1, b2) de ladite base (70, 74) supérieure à 1,4 fois ladite hauteur (h1, h2).

7. Conduite flexible selon la revendication 5 ou 6, **caractérisée en ce que** ledit un desdits au moins deux fil profilé (42) présente une hauteur (h1) comprise entre 1,2 et 1,6 fois la hauteur (h2) dudit autre desdits au moins deux fils profilés (44).

8. Conduite flexible selon la revendication 7, **caractérisée en ce que** ledit un desdits au moins deux fil profilé (42) présente une section dont la surface est comprise entre 0,8 et 1,5 fois la surface dudit autre desdits au moins deux fils profilés (44).

9. Conduite flexible selon l'une quelconque des revendications 5 à 8, **caractérisée en ce que**, ledit un desdits au moins deux fil profilé (42) présentant un sommet (72) opposé à ladite base (70), ledit sommet (72) et ladite base (70) dudit un desdits au moins deux fil profilé (42) enroulé hélicoïdalement définissent respectivement deux enveloppes tubulaires coaxiales espacées l'une de l'autre, et **en ce que** ledit autre desdits au moins deux fils profilés (44) s'étend sensiblement à équidistance desdites enveloppes tubulaires, lorsque ladite conduite flexible (10) s'étend longitudinalement.

10. Procédé de réalisation d'une conduite flexible, ladite conduite présentant deux structures tubulaires coaxiales, respectivement interne et externe, et une couche tubulaire de blocage axial située entre lesdites structures tubulaires, ledit procédé étant du type selon lequel on fournit deux fils profilés (42, 44) présentant chacun une section trapézoïdale sensiblement isocèle, ladite section trapézoïdale définissant une base (70, 74) et deux flancs latéraux opposés (80, 82) inclinés l'un par rapport à l'autre, l'un desdits deux fils profilés (42) étant enroulé hélicoïdalement à pas court de façon que ladite base (70) soit orientée vers la structure tubulaire interne et en formant des premières spires espacées les unes des autres, tandis que l'autre desdits au moins deux fils profilés (44) est enroulé hélicoïdalement entre lesdites premières spires espacées, ladite base opposée à ladite structure tubulaire interne et flancs latéraux contre flancs latéraux en formant des spires jointives de façon à bloquer axialement en compression ladite conduite, lesdites spires jointives définissant deux surfaces de joint inclinées par rapport à l'axe de ladite conduit
**caractérisé en ce qu'**il comprend en outre les étapes suivantes :
a) on fournit au moins un fil de structure ;
b) on enroule ledit au moins un fil de structure à pas court pour former des spires de structure bloquées transversalement les unes par rapport aux autres ; et,
c) on enroule ledit un desdits deux fils profilés (42) en appui sur lesdites spires de structure, la déformation en fléchissement de ladite couche tubulaire de blocage étant susceptible de provoquer simultanément le mouvement relatif axial desdites spires de structure et le déplacement relatif transversal desdites spires jointives suivant lesdites surfaces de joint inclinées de manière à autoriser le fléchissement de ladite conduite.

11. Procédé selon la revendication 10, **caractérisé en ce qu'**à l'étape a) on fournit un fil d'agrafage formant ledit au moins un fil de structure et à l'étape b) on enroule ledit fil d'agrafage pour former des spires agrafées les unes aux autres.

12. Procédé selon la revendication 10 ou 11, **caractérisé en ce qu'**à l'étape b) on enroule ledit fil de structure selon un sens et **en ce qu'**à l'étape c) on enroule ledit au moins un fil profilé selon un sens opposé de manière à croiser ledit au moins un fil profilé et ledit fil de structure.

13. Procédé selon l'une quelconque des revendications 10 à 12, **caractérisé en ce que** l'étape c) comprend les étapes suivantes :
- on fournit deux fils profilés de section sensiblement trapézoïdale isocèle, lesdits fils profilés présentant une base et un sommet opposé lesdits flancs latéraux correspondant aux surfaces non parallèles desdits fils profilés ;
- on enroule l'un desdits deux profilés sur ladite structure tubulaire interne en appliquant la base dudit un desdits profilés sur la structure tubulaire interne de manière à former des spires espacées les unes des autres d'un premier pas P1 ;
- on enroule l'autre desdits deux profilés entre lesdites spires espacées en appliquant le sommet dudit autre desdits deux profilés en regard de ladite structure tubulaire de façon que les bases desdits deux profilés soient respectivement opposées l'une de l'autre ; et,
- on enfonce l'autre desdits deux profilés (44') de façon à écarter lesdites spires d'un pas, supérieur à P1.

14. Procédé selon la revendication 13, **caractérisé en ce qu'**en outre, on entraîne en translation ledit un desdits deux profilés (42') pour rapprocher lesdites spires l'une de l'autre de façon à écarter ledit autre desdits deux profilés de ladite structure tubulaire.

15. Procédé selon la revendication 13 ou 14, **caractérisé en ce qu'**on ajuste l'autre desdits deux profilés (44') à équidistance de la base et du sommetdudit un desdits deux profilés (42').

16. Procédé selon l'une quelconque des revendications 10 à 12, **caractérisé en ce que** l'étape c) comprend les étapes suivantes :
- on fournit deux fils profilés de section sensiblement trapézoïdale isocèle, lesdits fils profilés présentant une base et un sommet opposé lesdits flancs latéraux correspondant aux surfaces non parallèles desdits fils profilés ;
- on enroule l'un desdits deux profilés sur ladite structure tubulaire interne en appliquant la base dudit un desdits profilés sur la structure tubulaire interne de manière à former des spires espacées les une des autres d'une distance déterminée ;
- on maintient lesdites spires à ladite distance déterminée ; et,
- on enroule l'autre desdits deux profilés entre lesdites spires espacées en appliquant le sommet dudit autre desdits deux profilés en regard de ladite structure tubulaire de façon que les bases desdits deux profilés soient respectivement opposées l'une de l'autre.

## Claims

1. A flexible pipe (10) for carrying hydrocarbons, said pipe having two coaxial tubular structures, these being an internal one (16, 18; 34, 36, 38) and an external one (22, 24, 25, 26; 46, 48, 50, 52, 54, 56) respectively, and a tubular axial blocking layer (20; 40) located between said tubular structures, said tubular blocking layer (20; 40) comprising at least two section wires (42, 44) helically wound with a short pitch, said at least two section wires (42, 44) each having a substantially isosceles trapezoidal cross section, said trapezoidal cross section defining a base (70, 74) and two opposing lateral flanks (80, 82) that are inclined relative to one another, said base (70) of one of said at least two section wires being directed toward the internal tubular structure (18; 38) while said base (74) of the other of said at least two section wires is directed away from said internal tubular structure (18; 38), said at least two section wires being wound, lateral flank against lateral flank, forming contiguous coils so as to block said pipe axially in compression, said contiguous coils defining two mating surfaces that are inclined with respect to the axis of said pipe;
**characterized in that** said internal tubular structure (18; 38) comprises a structural wire wound at a short pitch to form structural coils that are transversely blocked relative to one another;
and **in that** said one of said at least two section wires (42) is wound pressing against said structural coils so that the bending deformation of said tubular blocking layer (20; 40) simultaneously causes relative axial movement of said structural coils and relative transverse displacement of said contiguous coils along said inclined mating surfaces so as to allow said pipe (10) to bend.

2. The flexible pipe as claimed in claim 1, **characterized in that** said structural wire consists of an interlocking wire, said interlocking wire forming interlocked coils.

3. The flexible pipe as claimed in claim 1 or 2, **characterized in that** said one of said at least two section wires (42) and said structural wire are cross-wound.

4. The flexible pipe as claimed in any one of claims 1 to 3, **characterized in that** said lateral flanks (80, 82) are inclined with respect to said base (70, 74) by an angle ranging between 50° and 70°.

5. The flexible pipe as claimed in any one of claims 1 to 4, **characterized in that** said one of said at least two section wires (42) has a height (h1) greater than the height (h2) of said other of said at least two section wires (44).

6. The flexible pipe as claimed in claim 5, **characterized in that** each of said section wires (42, 44) has a width (b1, b2) of said base (70, 74) that is greater than 1.4 times said height (h1, h2).

7. The flexible pipe as claimed in claim 5 or 6, **characterized in that** said one of said at least two section wires (42) has a height (h1) ranging between 1.2 and 1.6 times the height (h2) of said other of said at least two section wires (44).

8. The flexible pipe as claimed in claim 7, **characterized in that** said one of said at least two section wires (42) has a cross section the area of which ranges between 0.8 and 1.5 times the area of said other of said at least two section wires (44).

9. The flexible pipe as claimed in any one of claims 5 to 8, **characterized in that**, with said one of said at least two section wires (42) having a top (72) opposite said base (70), said top (72) and said base (70) of said one of said two helically wound section wires (42) respectively define two coaxial tubular envelopes spaced apart, and **in that** said other of said at least two section wires (44) extends substantially equidistant from said tubular envelopes when said flexible pipe (10) extends longitudinally.

10. A method of producing a flexible pipe, said pipe having two coaxial tubular structures, these being an internal one and an external one respectively, and a tubular axial blocking layer located between said tubular structures, said method being of the type whereby there are provided two section wires (42, 44) each having a substantially isosceles trapezoidal cross section, said trapezoidal cross section defining a base (70, 74) and two opposing lateral flanks (80, 82) that are inclined relative to one another, one of said two section wires (42) being helically wound with a short pitch so that said base (70) is directed toward the internal tubular structure, forming first coils spaced apart, while the other of said at least two section wires (44) is helically wound between said spaced-apart first coils, said base directed away from said internal tubular structure and lateral flanks against lateral flanks, forming contiguous coils in order to block said pipe axially in compression, said contiguous coils defining two mating surfaces that are inclined relative to the axis of said pipe;
**characterized in that** it further comprises the following steps:
a) at least one structural wire is provided;
b) said at least one structural wire is wound at a short pitch to form structural coils that are transversely blocked relative to one another; and
c) said one of said two section wires (42) is wound pressing against said structural coils, the bending deformation of said tubular blocking layer being capable simultaneously of causing the relative axial movement of said structural coils and the relative transverse displacement of said contiguous coils along said inclined mating surfaces so as to allow said pipe to bend.

11. The method as claimed in claim 10, **characterized in that**, in step a), there is provided an interlocking wire that forms said at least one structural wire and, in step b), said interlocking wire is wound in such a way as to form coils that are interlocked with one another.

12. The method as claimed in claim 10 or 11, **characterized in that**, in step b), said structural wire is wound in one direction and **in that**, in step c), said at least one section wire is wound in an opposite direction so that said at least one section wire and said structural wire cross.

13. The method as claimed in any one of claims 10 to 12, **characterized in that** step c) involves the following steps:
- two section wires of substantially isosceles trapezoidal section are provided, said section wires having a base, and a top opposite, said lateral flanks corresponding to the non-parallel surfaces of said section wires;
- one of said two sections is wound on said internal tubular structure, resting the base of said one of said sections against the internal tubular structure so as to form coils that are spaced apart by a first pitch P1;
- the other of said two sections is wound between said spaced-apart coils, pressing the top of said other of said two sections toward said tubular structure so that the bases of said two sections face in opposite directions to one another; and
- the other of said two sections (44') is pushed in so as to separate said coils by a pitch greater than P1.

14. The method as claimed in claim 13, **characterized in that** said one of said two sections (42') is also moved translationally in order to bring said coils closer together so as to separate said other of said two sections from said tubular structure.

15. The method as claimed in claim 13 or 14, **characterized in that** the other of said two sections (44') is fitted equidistant from the base and the top of said one of said two sections (42').

16. The method as claimed in any one of claims 10 to 12, **characterized in that** step c) involves the following steps:
- two section wires of substantially isosceles trapezoidal section are provided, said section wires having a base, and a top opposite, said lateral flanks corresponding to the non-parallel surfaces of said section wires;
- one of said two sections is wound on said internal tubular structure, resting the base of said one of said sections against the internal tubular structure so as to form coils that are spaced apart by a set distance;
- said coils are kept at said set distance; and
- the other of said two sections is wound between said spaced-apart coils, pressing the top of said other of said two sections toward said tubular structure so that the bases of said two sections face in opposite directions to one another.

## Patentansprüche

1. Schlauch (10) für die Förderung von Kohlenwasserstoffen, wobei der Schlauch zwei koaxiale röhrenförmige Strukturen, eine innen liegende (16, 18; 34, 36, 38) bzw. eine außen liegende (22, 24, 25, 26; 46, 48, 50, 52, 54, 56), und eine röhrenförmige axiale Sperrschicht (20; 40) aufweist, die zwischen den röhrenförmigen Strukturen angeordnet ist, wobei die röhrenförmige Sperrschicht (20; 40) zumindest zwei Profilleitungen (42, 44) enthält, die mit kleiner Gangart spiralförmig gewickelt sind, wobei die zumindest zwei Profilleitungen (42, 44) jeweils einen trapezförmigen, im Wesentlichen gleichschenkligen Querschnitt aufweisen, wobei der trapezförmige Querschnitt eine Basis (70, 74) und zwei gegenüberliegende seitliche Flanken (80, 82), die relativ zueinander geneigt sind, bildet, wobei die Basis (70) der einen der zumindest zwei Profilleitungen in Richtung der innen liegenden röhrenförmigen Struktur (18; 38) ausgerichtet ist, während die Basis (74) der anderen der zumindest zwei Profilleitungen entgegengesetzt zu der innen liegenden röhrenförmigen Struktur (18; 38) ausgerichtet ist, wobei die zumindest zwei Profilleitungen mit seitlicher Flanke gegen seitliche Flanke gewickelt sind, indem aneinanderstoßende Windungen gebildet werden, derart, dass sie den Schlauch axial gegen Kompression sperren, wobei die aneinanderstoßenden Windungen zwei Verbindungsflächen bilden, die relativ zu der Achse des Schlauchs geneigt sind, **dadurch gekennzeichnet, dass**
die innen liegende röhrenförmige Struktur (18; 38) eine mit kleiner Gangart gewickelte Strukturleitung enthält, um Strukturwindungen zu bilden, die in Querrichtung relativ zueinander gesperrt sind, und dass
die eine der zumindest zwei Profilleitungen (42) in Abstützung auf den Strukturwindungen gewickelt ist, derart, dass die Verformung durch Biegung der röhrenförmigen Sperrschicht (20; 40) gleichzeitig die relative axiale Bewegung der Strukturwindungen und die relative quergerichtete Verschiebung der aneinanderstoßenden Windungen entlang der geneigten Verbindungsflächen bewirkt, so dass die Biegung des Schlauchs (10) ermöglicht wird.

2. Schlauch nach Anspruch 1, **dadurch gekennzeichnet, dass** die Strukturleitung durch eine Klammerleitung gebildet ist, wobei die Klammerleitung verklammerte Windungen bildet.

3. Schlauch nach Anspruch 1 oder 2, **dadurch gekennzeichnet, dass** die eine der zumindest zwei Profilleitungen (42) und die Strukturleitung gekreuzt gewickelt sind.

4. Schlauch nach einem der Ansprüche 1 bis 3, **dadurch gekennzeichnet, dass** die seitlichen Flanken (80, 82) relativ zu der Basis (70, 74) um einen Winkel zwischen 50° und 70° geneigt sind.

5. Schlauch nach einem der Ansprüche 1 bis 4, **dadurch gekennzeichnet, dass** die eine der zumindest zwei Profilleitungen (42) eine Höhe (h1) aufweist, die größer als die Höhe (h2) der anderen der zumindest zwei Profilleitungen (44) ist.

6. Schlauch nach Anspruch 5, **dadurch gekennzeichnet, dass** jede der Profilleitungen (42, 44) eine Breite (b1, b2) der Basis (70, 74) aufweist, die um das 1,4-Fache größer als die Höhe (h1, h2) ist.

7. Schlauch nach Anspruch 5 oder 6, **dadurch gekennzeichnet, dass** die eine der zumindest zwei Profilleitungen (42) eine Höhe (h1) aufweist, die zwischen dem 1,2-Fachen und 1,6-Fachen der Höhe (h2) der anderen der zumindest zwei Profilleitungen (44) beträgt.

8. Schlauch nach Anspruch 7, **dadurch gekennzeichnet, dass** die eine der zumindest zwei Profilleitungen (42) einen Querschnitt aufweist, dessen Fläche zwischen dem 0,8-Fachen und 1,5-Fachen der Fläche der anderen der zumindest zwei Profilleitungen (44) beträgt.

9. Schlauch nach einem der Ansprüche 5 bis 8, **dadurch gekennzeichnet, dass** die eine der zumindest zwei Profilleitungen (42) einen Scheitel (72) aufweist, welcher der Basis (70) gegenüberliegt, wobei der Scheitel (72) und die Basis (70) der einen der zumindest zwei Profilleitungen (42), die spiralförmig gewickelt ist, jeweils zwei röhrenförmige koaxiale Ummantelungen bilden, die voneinander beabstandet sind, und dass sich die andere der zumindest zwei Profilleitungen (44) im Wesentlichen in gleichem Abstand von den röhrenförmigen Ummantelungen erstreckt, wenn sich der Schlauch (10) in Längsrichtung erstreckt.

10. Verfahren zur Herstellung eines Schlauchs, wobei der Schlauch zwei koaxiale röhrenförmige Strukturen, eine innen liegende bzw. eine außen liegende, und eine röhrenförmige axiale Sperrschicht, die zwischen den röhrenförmigen Strukturen angeordnet ist, aufweist, wobei das Verfahren von dem Typ ist, wonach zwei Profilleitungen (42, 44) bereitgestellt werden, die jeweils einen trapezförmigen, im Wesentlichen gleichschenkligen Querschnitt aufweisen, wobei der trapezförmige Querschnitt eine Basis (70, 74) und zwei seitliche gegenüberliegende Flanken (80, 82), die relativ zueinander geneigt sind, bildet, wobei die eine der zwei Profilleitungen (42) mit kleiner Gangart spiralförmig gewickelt ist, derart, dass die Basis (70) in Richtung der innen liegenden röhrenförmigen Struktur ausgerichtet ist, und indem erste, voneinander beabstandete Windungen bildet werden, während die andere der zumindest zwei Profilleitungen (44) zwischen den ersten beabstandeten Windungen spiralförmig gewickelt ist, wobei die Basis der innen liegenden röhrenförmigen Struktur mit seitlichen Flanken gegen seitliche Flanken gegenüberliegt, indem aneinanderstoßende Windungen gebildet werden, derart, dass sie den Schlauch axial gegen Kompression sperren, wobei die aneinanderstoßenden Windungen zwei Verbindungsflächen bilden, die relativ zu der Achse des Schlauchs geneigt sind, **dadurch gekennzeichnet, dass** es ferner die folgenden Schritte umfasst:
a) Bereitstellung zumindest einer Strukturleitung;
b) Wicklung der zumindest einen Strukturleitung mit kleiner Gangart, um Strukturwindungen zu bilden, die in Querrichtung relativ zueinander gesperrt sind; und
c) Wicklung der einen der zwei Profilleitungen (42) in Abstützung auf den Strukturwindungen, wobei die Verformung durch Biegung der röhrenförmigen Sperrschicht gleichzeitig die relative axiale Bewegung der Strukturwindungen und die relative quergerichtete Verschiebung der aneinanderstoßenden Windungen entlang der geneigten Verbindungsflächen bewirken kann, so dass die Biegung des Schlauchs ermöglicht wird.

11. Verfahren nach Anspruch 10, **dadurch gekennzeichnet, dass** in Schritt a) eine Klammerleitung bereitgestellt wird, welche die zumindest eine Strukturleitung bildet, und in Schritt b) die Klammerleitung gewickelt wird, um miteinander verklammerte Windungen zu bilden.

12. Verfahren nach Anspruch 10 oder 11, **dadurch gekennzeichnet, dass** in Schritt b) die Strukturleitung in einer Richtung gewickelt wird und dass in Schritt c) die zumindest eine Profilleitung in einer entgegengesetzten Richtung gewickelt wird, so dass die zumindest eine Profilleitung und die Strukturleitung gekreuzt werden.

13. Verfahren nach einem der Ansprüche 10 bis 12, **dadurch gekennzeichnet, dass** Schritt c) die folgenden Schritte umfasst:
- Bereitstellung von zwei Profilleitungen mit im Wesentlichen trapezförmigem, gleichschenkligen Querschnitt, wobei die Profilleitungen eine Basis und einen gegenüberliegenden Scheitel aufweisen, wobei die seitlichen Flanken den nicht parallelen Flächen der Profilleitungen entsprechen;
- Wicklung einer der zwei Profilleitungen auf der innen liegenden röhrenförmigen Struktur, indem die Basis des einen der Profile auf der innen liegenden röhrenförmigen Struktur aufgebracht wird, derart, dass voneinander beabstandete Windungen mit einem ersten Gang P1 gebildet werden;
- Wicklung der anderen der zwei Profilleitungen zwischen den beabstandeten Windungen, indem der Scheitel der anderen der zwei Profilleitungen der röhrenförmigen Struktur gegenüber aufgebracht wird, derart, dass die Basen der zwei Profile einander jeweils gegenüberliegen; und
- Eindrücken des anderen der zwei Profile (44'), derart, dass die Windungen um einen Gang aufgespreizt werden, der größer als P1 ist.

14. Verfahren nach Anspruch 13, **dadurch gekennzeichnet, dass** ferner das eine der zwei Profile (42') zur Verschiebung angetrieben wird, um die Windungen einander anzunähern, so dass das andere der zwei Profile der röhrenförmigen Struktur gespreizt wird.

15. Verfahren nach Anspruch 13 oder 14, **dadurch gekennzeichnet, dass** das andere der zwei Profile (44') in gleichem Abstand von der Basis und vom Scheitel des einen der zwei Profile (42') ausgerichtet wird.

16. Verfahren nach einem der Ansprüche 10 bis 12, **dadurch gekennzeichnet, dass** Schritt c) die folgenden Schritte umfasst:
- Bereitstellung von zwei Profilleitungen mit im Wesentlichen trapezförmigem, gleichschenkligen Querschnitt, wobei die Profilleitungen eine Basis und einen gegenüberliegenden Scheitel aufweisen, wobei die seitlichen Flanken den nicht parallelen Flächen der Profilleitungen entsprechen;
- Wicklung der einen der zwei Profilleitungen auf der innen liegenden röhrenförmigen Struktur, indem die Basis des einen der Profile auf der innen liegenden röhrenförmigen Struktur aufgebracht wird, derart, dass voneinander beabstandete Windungen mit einem festgelegten Abstand gebildet werden;
- Halten der Windungen in dem festgelegten Abstand; und
- Wicklung der anderen der zwei Profilleitungen zwischen den beabstandeten Windungen, indem der Scheitel der anderen der zwei Profilleitungen der röhrenförmigen Struktur gegenüber aufgebracht wird, derart, dass die Basen der zwei Profile einander jeweils gegenüberliegen.
